Europäisches Patentamt

European Patent Office

Office européen des brevets

(11) Veröffentlichungsnummer: **0 057 926**
A2

(12) **EUROPÄISCHE PATENTANMELDUNG**

(21) Anmeldenummer: **82100861.2**

(22) Anmeldetag: **06.02.82**

(51) Int. Cl.³: **B 60 J 7/22**

(30) Priorität: **07.02.81 DE 3104309**

(43) Veröffentlichungstag der Anmeldung:
**18.08.82 Patentblatt 82/33**

(84) Benannte Vertragsstaaten:
AT CH FR GB LI NL

(71) Anmelder: Splithoff, Theodor
Max-Reger-Strasse 1a
D-6450 Hanau am Main(DE)

(72) Erfinder: Splithoff, Theodor
Max-Reger-Strasse 1a
D-6450 Hanau am Main(DE)

(74) Vertreter: Meier, Robert, Dipl.-Ing.
Patentanwalt Dipl.-Ing. Robert Meier Auf dem Mühlberg
16
D-6000 Frankfurt/Main(DE)

(54) Lösbare Halterung für Dachwindabweiser.

(57) Die Erfindung bezieht sich auf eine lösbare Halterung für Dachwindabweiser an Kraftfahrzeugen mit zwei quer zur Längsrichtung des Kraftfahrzeuges am Dachwindabweiser verschieblichen Befestigungseinrichtungen, die entlang der optimalen Festspannachse des Dachwindabweisers auf unterschiedliche Breiten der Schiebedachöffnungen einstellbar sind.

Fig. 2

EP 0 057 926 A2

- 1 -

## Lösbare Halterung für einen Dachwindabweiser

Die Erfindung bezieht sich auf eine lösbare Halterung für einen Dachwindabweiser an Kraftfahrzeugen mit wenigstens zwei an unterschiedliche Dach- bzw. Schiebedachöffnungsbreiten anpassbaren Befestigungseinrichtungen, deren Oberteile mit dem Dachwindabweiser und deren gelenkig daran angeschlossene, in die Schiebedachöffnung hineinragenden Unterteile mit dem Rahmen der Schiebedachöffnung verbunden sind und den Dachwindabweiser, unter Verwendung von Dichtprofilen entlang seiner Vorder- und Seitenkanten, auf dem Kraftfahrzeugdach festhalten.

Übliche Dachwindabweiser werden durch bekannte lösbare Halterungen am Dachrahmen der Schiebedachöffnung befestigt. Diese Halterungen bestehen im wesentlichen aus abgebogenen Blechstreifen, deren nach oben ragende Enden mit dem Windabweiser verschraubt sind und deren untere Enden am Dachrahmen eingehängt werden.

Die Dachwindabweiser werden, unabhängig von der jeweiligen Gestaltung des Fahrzeugdaches und der Schiebedachöffnungen, nur in einer Größe hergestellt. Ihre Unterkanten sind mit Dichtprofilen versehen, so daß

0057926

sich die auf dem Kraftfahrzeugdach festgespannten Dachwindabweiser auch infolge ihrer eigenen Elastizität an unterschiedlichen Dachformen anpassen.

Um jedoch den unterschiedlichen Breiten der Schiebedachöffnungen Rechnung zu tragen, müssen die Löcher zum Durchstecken der Befestigungsschrauben im Dachwindabweiser an unterschiedlichen Stellen gebohrt werden. Bei anderen bekannten Ausführungsformen muß für jede Schiebedachöffnungsbreite eine eigene Halterung für den Dachwindabweiser vorgesehen sein. Die Breite der Schiebedachöffnung bzw. des Daches wird quer zur Längsachse des Kraftfahrzeugdaches gemessen.

Um bei diesen Voraussetzungen eine universell verwendbare Halterung für einen Dachwindabweiser zu schaffen, ist es bekanntgeworden, jedes Befestigungselement aus zwei drehbar miteinander verbundenen, einen Winkel einschließenden Teilen zu fertigen, von denen der eine Teil am Windabreiser und der andere Teil am Dachrahmen anbringbar ist. Durch Verdrehen der beiden Teile relativ zueinander läßt sich der Abstand zwischen den senkrechten Ebenen, in denen einerseits die Befestigungsstelle der Halterung am Dachrahmen und andererseits die Befestigungsstelle der Halterung am Windabweiser liegt, in relativ weiten Grenzen variieren, so daß der Windabweiser mit ein und derselben Halterung sowohl an einem Fahrzeugdach mit einer relativ schmalen Dachöffnung, als auch an einem Fahrzeugdach mit einer relativ breiten Dachöffnung angebracht werden kann (DE-GM 76 37 309).

Es hat sich jedoch herausgestellt, daß mit dieser Halterung zwar ein Dachwindabweiser an verschiedene Dachbreiten bzw. Schiebedachöffnungsbreiten angepaßt werden kann, daß jedoch beim Festspannen dabei Zugkräfte in unvorteilhaften Bereichen des Dachwindabweisers auf diesen ausgeübt werden. Bestehen beispiels-

weise zu große Abstände zwischen der Befestigung der Halterung am Dachwindabweiser und der Befestigung am Öffnungsrahmen, können sich Verzerrungen und ähnliches ausbilden. Wird beispielsweise der Angriffspunkt des Hakens am Rahmen zu weit nach hinten in bezug auf den Angriffspunkt der Halterung am Dachwindabweiser verschoben, kann es vorkommen, daß die Vorderkante des Dachwindabweisers nicht ordnungsgemäß auf das Kraftfahrzeugdach gepreßt wird. Wird hingegen der Angriffspunkt am Rahmen der Schiebedachöffnung zu weit vor dem Befestigungspunkt am Dachwindabweiser angesetzt, kann es sein, daß die hinteren Bereiche des Dachwindabweisers nicht ordnungsgemäß auf das Kraftfahrzeugdach gespannt werden. Im Laufe der Zeit insbesondere infolge von Sonnen- bzw. Temperatureinwirkungen, hat das zur Folge, daß der Dachwindabweiser seinen guten Paßsitz auf dem Kraftfahrzeugdach verliert.

Demgegenüber liegt der vorliegenden Erfindung die Aufgabe zugrunde, eine anpaßbare lösbare Halterung für Dachwindabweiser zu schaffen, die unter allen Bedingungen und auf Dauer einen festen Sitz des Dachwindabweisers auf dem Kraftfahrzeugdach ermöglicht.

Es wurde gefunden, daß sich diese Aufgabe in einfacher Weise dadurch lösen läßt, daß bei einer lösbaren Halterung der eingangs geschilderten Art jedes Oberteil ein quer zur Längsrichtung des Kraftfahrzeugdaches angeordnetes Schiebeelement mit einem daran verschiebbaren Schiebestück ist, an das das Unterteil anschraubbar ist. Im einzelnen ist das Schiebeelement eine Verschiebewanne mit einem Bodenschlitz für das Schiebestück. Erfindungsgemäß ist das Schiebeelement entlang der optimalen Festspannachse am Dachwindabweiser angeordnet.

Hierdurch wird erreicht, daß der Zug auf dem Dachwindabweiser stets in der günstigsten Spannachse ausgeübt wird. Er kann dabei nicht nach vorne oder nach hinten hochkippen. Hierdurch wird bei idealer Anpaßbarkeit an verschiedene Schiebedachöffnungsbreiten eine Verbesserung der Befestigung von Dachwindabweisern erreicht. Hinzu kommt, daß die Elemente der lösbaren Halterung entweder einfache Metall- oder einfache Spritz-Kunststoffteile sind. Die erfindungsgemäße lösbare Halterung eignet sich besonders gut für den do-it-your-self-Anbau von Dachwindabweisern.

Im einzelnen weist ein Schiebeelement an seinen Querseiten Befestigungsöffnungen für durch Löcher im Dachwindabweiser steckbare Befestigungselemente oder Befestigungsansätze am Dachwindabweiser auf. Die Befestigungselemente können aus Kunststoff bzw. aus Metall bestehen.

Die Verschiebewanne ist bei einem ersten Ausführungsbeispiel der Erfindung in ein streifenförmiges Verschiebeelement aus Kunststoff eingelassen, dessen zum Kraftfahrzeugdach hinweisende Längskantenbereiche durch Stege verstärkt sind. Hierdurch wird erreicht, daß Verziehungen bzw. Verformungen der Verschiebeelemente infolge unterschiedlicher Temperaturen und Alterungserscheinungen nach Möglichkeit kompensiert werden.

Bei einem anderen Ausführungsbeispiel ist die Verschiebewanne in ein streifenförmiges Verschiebeelement aus Blech eingeformt, vorzugsweise eingedrückt.

In beiden Ausführungsbeispielen ist das Schiebestück eine Schiebeschraube mit einem hammerartigen Schiebekopf, der in der Verschiebewanne gleitet. Um unabhängig von unterschiedlichen Formgebungen des Kraftfahrzeugdaches zu werden, kann der hammerartige Schiebekopf in Verschieberichtung obere und untere Abrundungen aufweisen, die eine ausreichende Beweglichkeit der Halterung gegenüber dem Rahmen der Schiebedachöffnung
ermöglichen.

Das Unterteil der lösbaren Halterung ist eine auf die
Schiebeschraube aufschraubbare Schraubmutter mit einem Kopf, der einen Haken bzw. einen Einhänge- oder
einen Schraubhaken für eine Befestigungsschraube
trägt. Um auch bei dieser Verbindung zwischen Ober-
und Unterteil der lösbaren Halterung eine genügende
Gelenkigkeit sicherzustellen, kann der Kopf der Schraubmutter sowie der an ihr sitzende Teil des Hakens mit
einander entsprechenden Rundungen ausgebildet sein. Die
Schraubmutter ist in der Regel mit einem Vier- bzw.
Sechskant oder einem Querloch zum Festspannen ausgerüstet.

Verschiedene vorteilhafte Ausbildungen der Haken bzw.
Einhänge- oder Schraubhaken lassen sich den Ansprüchen
12 bis 15 entnehmen.

Die Schiebeelemente lassen sich auf unterschiedliche
Weise am Dachwindabweiser befestigen. Bevorzugte Befestigungsmöglichkeiten sind in den Ansprüchen 16 bis 20
gekennzeichnet. Anstelle von Befestigungsschraubbolzen
mit schlitzlosem Kopf können, ohne am Kern der Erfindung
etwas zu ändern, auch Schlitzkopfschrauben verwendet
werden, wenn die Diebstahlsgefahr in Kauf genommen wird.

Durch die zu Nietköpfen verformbaren Ansätze am Schiebeelement nach Anspruch 20 wird die Ultra-Schall-Verformung von Einzelteilen zum Zweck der diebstahlsicheren
Befestigung von Dachwindabweisern zum ersten Mal an
Kraftfahrzeugen eingesetzt.

Eine weitere sehr einfache und vorteilhafte Ausbildung der Schiebeelemente zeigen die Ansprüche 21 und 22.

Von Vorteil ist, wenn die Befestigungsschrauben für den Haken am Rahmen der Schiebedachöffnung selbstschneidende Schrauben sind.

Ausführungsbeispiele der Erfindung werden nachfolgend anhand der Zeichnung beschrieben.

Es zeigt:

Fig. 1    eine schematische Draufsicht auf ein Kraftfahrzeugdach mit einem Dachwindabweiser,

Fig. 2    einen Querschnitt  entlang der Linie II II in Fig. 1,

Fig. 3    verschiedene Ansichten eines Schiebeelementes,

Fig. 4    einen Querschnitt entlang der Linie II II in Fig. 1, jedoch mit einem anders geformten Schiebeelement,

Fig. 5    ein Schiebeelement aus Metall,

Fig.6 u.7  verschiedene Befestigungen von Schiebeelementen am Dachwindabweiser,

Fig.8 u.9  unterschiedliche Hakenausbildungen und

Fig. 10   eine vorteilhafte Halterung eines Dachwindabweisers.

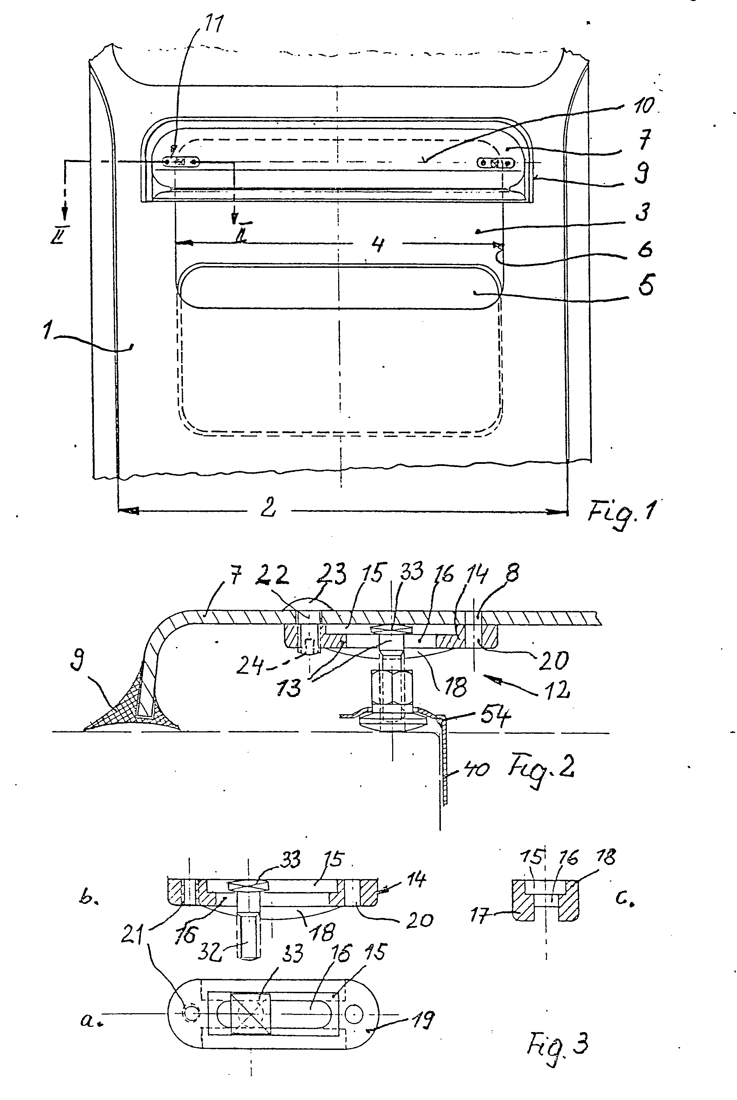

Fig. 1 zeigt in Draufsicht den vorderen Abschnitt eines Kraftfahrzeugdaches 1, in welchem eine Schiebedachöffnung 3 vorgesehen ist, in welcher sich ein Schiebedach 5 in üblicher Weise bewegen kann. Die Dachbreite 2 variiert nach Maßgabe des jeweiligen Fahrzeugtyps. Auch die Schiebedachöffnungsbreite 4 ändert sich nach Maßgabe der verschiedenen Kraftfahrzeugtypen.

Die Schiebedachöffnung 3 wird durch einen in Fig. 1 nur angedeuteten Rahmen 6 begrenzt.

Vor der Schiebedachöffnung 3 ist ein Dachwindabweiser 7 angedeutet, der verhindern soll, daß die Fahrtluft durch das geöffnete Schiebedach in das Innere des Kraftfahrzeuges eindringt. Wie im einzelnen weiter unten ersichtlich werden wird, sind die unteren Kanten der Vorder- und Seitenwände des Dachwindabweisers 7 mit einem Dichtprofil 9 umschlossen, welches, wie sich dieses beispielsweise der Fig. 2 entnehmen läßt, auf dem Kraftfahrzeugdach 1 aufsteht.

Im Dachwindabweiser sind Löcher 8 (Fig. 2) vorgesehen, durch welche Befestigungselemente 22, 25, 47/48 zur Unterseite des Dachwindabweisers 7 hindurchragen, die Bestandteile von lösbaren Halterungen 11 für den Dachwindabweiser 7 sind, mit denen dieser am Rahmen 6 der Schiebedachöffnung 3 befestigt werden kann. Die lösbaren Halterungen 11 liegen gemäß Fig. 1 auf der sogenannten optimalen Festspannachse 10, die empirisch ermittelt ist. Wenn in Deckung mit dieser optimalen Festspannachse Zugkräfte auf den Dachwindabweiser ausgeübt werden, liegt dieser unter Zwischenfügung des Dichtprofils 9 in optimaler Weise auf der Oberfläche des Kraftfahrzeugdaches 1 auf.

Diese optimale Halterung entfällt, wenn die lösbaren Halterungen 11 in Fahrzeugrichtung vor bzw. hinter der optimalen Festspannachse angreifen. Entweder wird die Auflage entlang der Vorderkante mangelhaft oder es besteht die Gefahr, daß sich die rückwärtigen Bereiche des Dachwindabweisers 7 mehr oder weniger vom Dach des Kraftfahrzeuges abheben. Diese unzulänglichen Halterungen des Dachwindabweisers 7 verstärken sich im Laufe der Zeit durch die Einwirkung unterschiedlicher Temperaturen bzw. einfach infolge der Alterung des Kunststof-

Fig. 2, die einen Schnitt entlang der Linie II II gemäß Fig. 1 darstellt, zeigt eine Befestigungseinrichtung 12, vermittels der jede Seite des Dachwindabweisers 7 auf das Kraftfahrzeugdach 1 gespannt wird. Ein Oberteil 13 besteht aus einem Schiebeelement 14, das gemäß Fig. 2 sowie der Fig. 3a bis 3c aus Kunststoff hergestellt und mit einer Verschiebewanne 15 versehen ist, an die sich ein offener Bodenschlitz 16 anschließt. Die Längskanten 17 der Verschiebewanne 15 sind mittels Stegen 18 verstärkt. Die einander gegenüberliegenden Querseiten 19 des Schiebeelementes 14 sind mit Befestigungsöffnungen 20 versehen, die glatte Innenwände bzw. Gewinde aufweisen. Das in den Fig. 2 und 3 dargestellte Schiebeelement 14 ist am Dachwindabweiser 7 mittels Befestigungsschraubbolzen 22 befestigt, die einen schlitzlosen Kopf 23 aufweisen und die durch Löcher 8 im Dachwindabweiser 7 hindurchgesteckt und mit dem Gewinde 21 der Befestigungsöffnungen 20 verschraubt sind. Hierzu wird mit einem geeigneten Werkzeug in den Vier- bzw. Sechskant 24 eingegriffen. Ohne am Kern der Erfindung etwas zu ändern, können auch Befestigungsschraubbolzen 22 mit geschlitztem Kopf verwendet werden.

Fig. 3a und 3b zeigen links eine mit einem Gewinde 21 versehene Befestigungsöffnung 20, wohingegen die Befestigungsöffnung 20 auf der rechten Seite des aus Kunststoff bestehenden Schiebeelementes 14 eine glatte Innenwand aufweist.

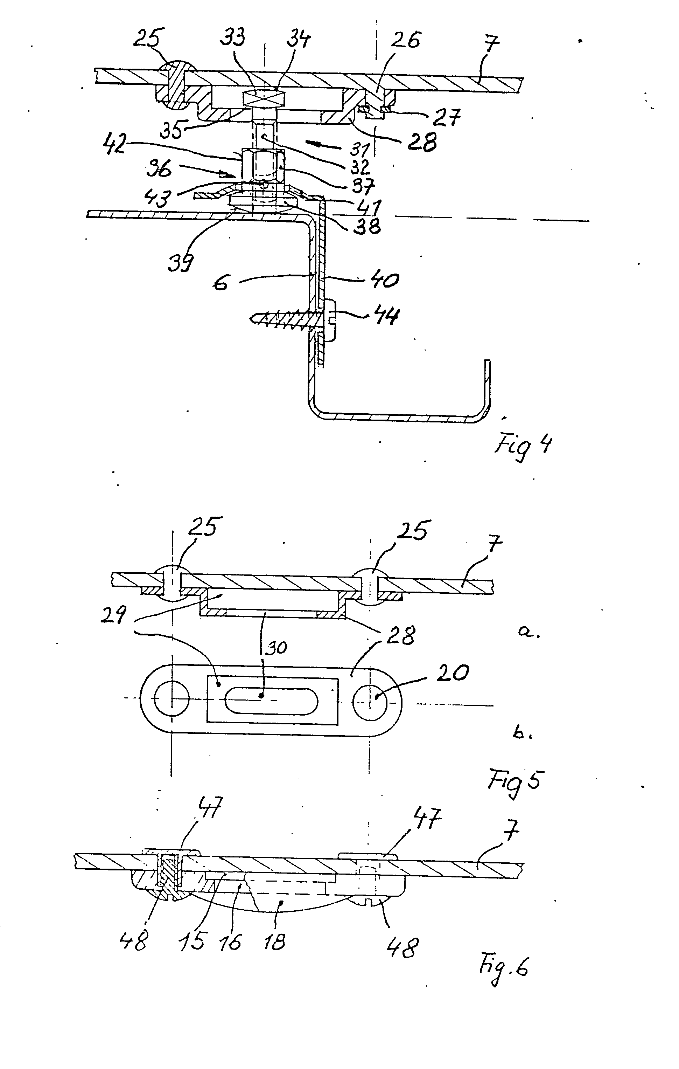

Fig. 4 läßt eine geringfügig abgeänderte Ausbildung eines Schiebeelementes 28 erkennen, welches vorzugsweise aus Blech hergestellt ist. Sein prinzipieller Aufbau gleicht demjenigen des Schiebeelementes 14, das aus Kunststoff hergestellt, vorzugsweise gespritzt ist, wohingegen das Schiebeelement 28 aus Blech gedrückt bzw. gestanzt ist. Die linke Seite der Fig. 4 zeigt, wie Schiebeelemente 14 bzw. 28 mittels Nieten 25 am Dachwindabweiser 7 befestigt werden können. Eine andere Befestigungsart ist auf der rechten Seite der Fig. 4 dargestellt, wo aus der Unterseite des Dachwindabweisers Befestigungsansätze herausragen, an denen die Schiebeelemente 14, 28, beispielsweise durch Wellensicherungen 27 oder durch nicht dargestellte Nietköpfe gesichert sind, die beispielsweise durch Ultraschallbearbeitung der hindurchragenden Teile der Befestigungsansätze 26 geformt werden.

Die Verschiebewanne 29 und der Bodenschlitz 30 sind entsprechend demjenigen der Fig. 1 und 3 ausgebildet.

Das allgemein mit 31 bezeichnete Schiebestück ist als Schiebeschraube 32 mit einem Schiebekopf 33 ausgebildet, der in Draufsicht in Fig. 3a angedeutet ist. Er weist eine obere Abrundung 34 sowie eine untere Abrundung 35 auf, die ein leichtes Verschieben des Schiebekopfes 33 in der Verschiebewanne 15 bzw. 29 und ein pendelartiges, geringfügiges Verschwenken der gesamten Konstruktion ermöglicht, wodurch das Befestigen am Rahmen 6 der Schiebedachöffnung 3 wesentlich erleichtert wird. Das Schiebestück 31 kann gemäß Fig. 4 mit nicht unbeträchtlichen Auslenkwinkeln parallel zum Rahmen 6 der Schiebedachöffnung hin und her pendeln.

An das Schiebestück 31 ist gelenkig ein allgemein mit 36 bezeichnetes Unterteil angehängt, welches aus einer Schraubmutter 37 und einem an deren Kopf 38 gelenkig angeschlossenen Haken 40 besteht. Der Kopf 38 weist eine untere Rundung 39 und der Haken 40 eine entsprechende Rundung 41 auf, wodurch Gelenkigkeit zwischen den Teilen 31 und 40 gewährleistet wird.

Das Schiebestück 31 ist mit einem Vier- bzw. Sechskant 42 versehen, durch den die Schiebeschraube 32 nach unten gezogen werden kann, so daß sich die gewünschte Spannung zwischen dem Dachwindabweiser 7 und der

fahrzeugdach ausbildet. Anstelle des Vier- bzw. Sechskants 42 kann zum Ansetzen eines Schraubwerkzeuges auch ein Querloch 43 vorgesehen sein.

Der Haken 40 wird mittels einer Befestigungsschraube 44 am Rahmen 6 der Schiebedachöffnung angeschraubt. Die Befestigungsschraube 44 kann als selbstschneidende Schraube ausgebildet sein.

Fig. 5 zeigt ein Schiebeelement 28 aus Metall, welches mittels Nieten 25 an das Kraftfahrzeugdach 7 angeschlossen ist. Die Verschiebewanne 29, der Bodenschlitz 30 und die Befestigungsöffnungen 20 können, wie beim Kunststoffschiebeelement 14 bemessen sein.

Fig. 6 zeigt eine weitere Befestigungsmöglichkeit eines Schiebeelementes 14 bzw. 28 am Dachwindabweiser. Als Befestigungselemente werden Kopfmuttern 47 verwendet, die durch die Löcher 8 im Dachwindabweiser und die Befestigungsöffnungen 20 im Schiebeelement 14, 28 hindurchgesteckt werden. Von unten werden in die Kopfmuttern 47 Schrauben 48 eingeschraubt, mit denen das Schiebeelement 14 bzw. 28 fest am Dachwindabweiser 7 festgehalten wird. Die Kopfmuttern 47 bzw. Schrauben 48 können aus Kunststoff bzw. Metall bestehen. Ohne am Kern der Erfindung etwas zu ändern, können die Schrauben auch so ausgebildet sein, daß anstelle des Schlitzes in ihnen ein Vier- bzw. Sechskant vorgesehen ist, wie dieses beispielsweise mit 24 in Fig. 2 angedeutet wurde.

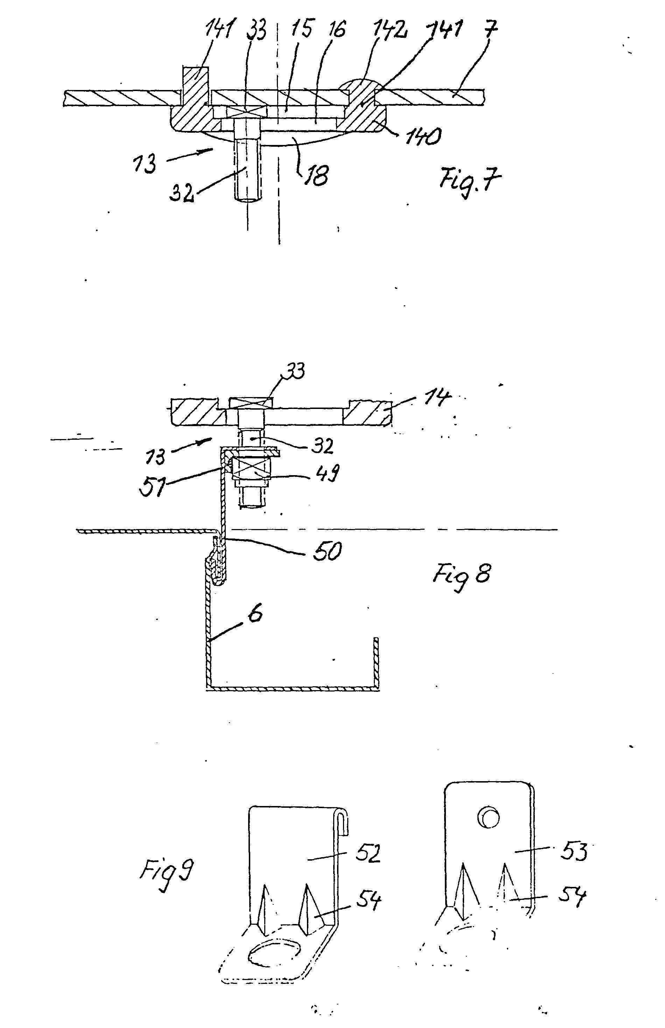

Gemäß Fig. 7 weist ein Schiebeelement 140 aus Kunststoff nach obenragende Ansätze 141 auf, von denen der links in Fig. 7 dargestellte in seiner ursprünglichen Gestalt dargestellt ist. Mit Hilfe geeigneter Ultra-Schall-Geräte kann das herausragende Ende des Ansatzes 141 zu einem rechts dargestellten Nietkopf 142 verformt werden. In Verbindung mit diesem Schiebeelement können beispielsweise Schiebeschrauben 32 mit einem Schiebekopf 33 zum Einsatz kommen.

In Fig. 2 ist angedeutet, daß der Haken 40 mit einer Versteifungsdicke 54 versehen ist, die eine Federung an der Abwinklungsstelle ausscheidet und ein sicheres Festspannen des Dachwindabweisers 7 ermöglicht.

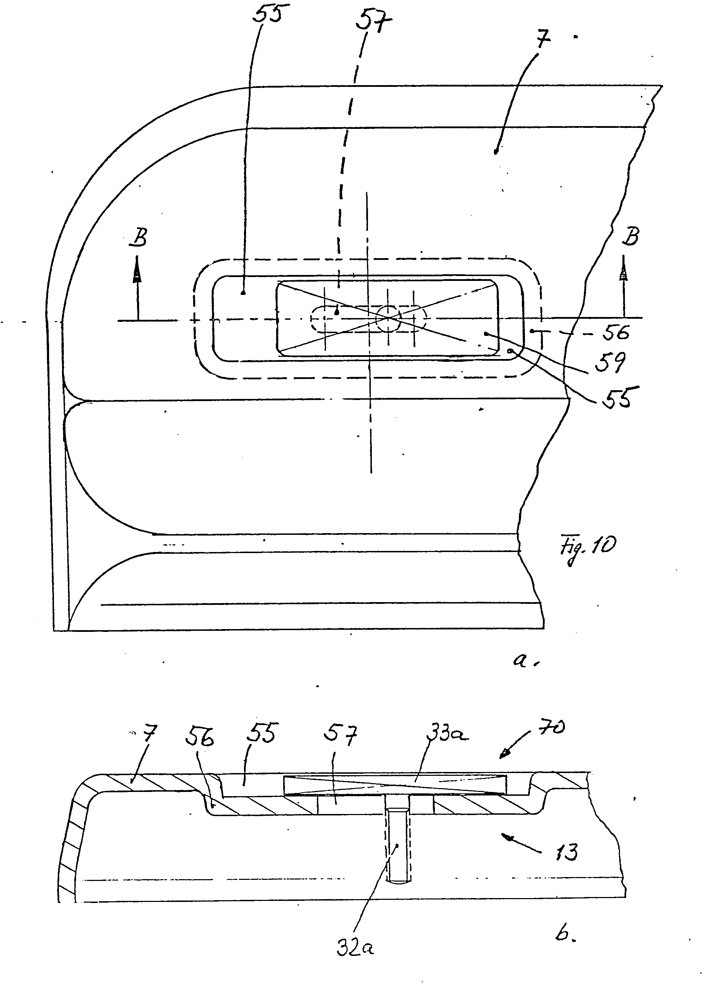

Fig. 9a und 9b zeigen einen Einhängehaken 52 bzw. einen Schraubhaken 53, die mit wenigstens einer Versteifungsdicke 54 versehen sind. In Fig. 9 sind zwei Versteifungsdicken rechts und links vom Schraubloch angedeutet.

Fig. 8 stellt eine weitere Möglichkeit dar, einen Einhängehaken 50 zu versteifen. Hierzu ist ein Verstärkungsstück 51 vorgesehen, welches so am Haken befestigt ist, daß die Schiebeschraube 32 sowohl durch die Öffnung im Haken, wie auch durch eine entsprechende Öffnung im Verstärkungsstück 51 hindurchgesteckt werden kann. Das Verstärkungsstück 51 weist einen Winkelansatz auf, der an der entsprechend ausgebildeten Form des Einhängehakens 50 anliegt und so sicher eine Verbiegung des Einhängehakens 50 verhindert.

In Fig. 8 ist weiterhin eine Vierkantmutter 49 dargestellt, die fest mit dem Verstärkungsstück 51 und damit fest mit dem Einhängehaken 50 verbunden ist. Die Schiebeschraube 52 wäre bei der Verwendung einer Vierkantmutter 49 an ihrem unteren Ende mit einem Innen-Vier- bzw. -Sechskant 24 gemäß Fig. 2 und mit einem runden Schiebekopf 33 zu versehen.

Fig. 10a und Fig. 10b zeigen ein Schiebeelement 70, das als längliche in den Dachwindabweiser 7 absenkbare Verschiebewanne 55 mit Seitenwänden 56 und einem Bodenschlitz 57 ausgebildet ist. Die Verschiebewanne 55 wird bei der Herstellung des Dachwindabweisers 7 mit hergestellt. Fig. 10b läßt erkennen, daß die Seitenwände 56 dem Schiebeelement 70 eine hinreichende Festigkeit und Steifigkeit geben.

In Verbindung mit dem Schiebeelement 70 kommt eine Schiebeschraube 32a mit einem länglichen Schiebekopf 33a zum Einsatz, der in jeder Verschiebestellung den Bodenschlitz 57 verdeckt. Fig. 10b zeigt einen Schnitt entlang der Linie BB in Fig. 10a. Das Verschiebeelement ist, wie bei den zuvor beschriebenen Ausführungsbeispielen, auch entlang der optimalen Festspannachse 10 des Dachwindabweisers 7 angeordnet. An die Verschiebeschraube 32a können die zuvor beschriebenen Unterteile 36 angebracht werden.

- *13* -

## Lösbare Halterung für einen Dachwindabweiser

Liste der verwendeten Bezeichnungen

 1 Kraftfahrzeugdach
 2 Dachbreite
 3 Schiebedachöffnung
 4 Schiebedachöffnungsbreite
 5 Schiebedach
 6 Rahmen der Schiebedachöffnung
 7 Dachwindabweiser
 8 Loch
 9 Dichtprofil
10 optimale Festspannachse
11 Lösbare Halterung
12 Befestigungseinrichtung
13 Oberteil
14 Schiebeelement (Kunststoff)
15 Verschiebewanne
16 Bodenschlitz
17 Längskante
18 Steg
19 Querseite
20 Befestigungsöffnung
21 Gewinde
22 Befestigungsschraubbolzen
23 schlitzloser Kopf
24 Vier- bzw. Sechskant
25 Niet

- 14 -

0057926

26  Befestigungsansatz

27  Wellensicherung

28  Schiebeelement (Blech)

29  Verschiebewanne

30  Bodenschlitz

31  Schiebestück

32  Schiebeschraube

33  Schiebekopf

34  obere Abrundung

35  untere Abrundung

36  Unterteil

37  Schraubmutter

38  Kopf

39  untere Rundung

40  Haken

41  Rundung

42  Vier- bzw. Sechskant

43  Querloch

44  Befestigungsschrauben (Haken/Dachrand)

45

46

47  Mutter mit Kopf

48  Schraube

49  Vierkantmutter

50  Einhängehaken

51  Verstärkungsstück

52  Einhängehaken

53  Schraubhaken

54  Versteifungsdicke

55  Verschiebewanne

56  Seitenwand

57  Bodenschlitz

32a  Schiebeschraube

33a  Schiebekopf

72  Schiebeelement

0057926

140 Schiebeelement (Kunststoff)
141 Ansatz
142 Nietkopf

- 1 -

Patentansprüche

1. Lösbare Halterung für einen Dachwindabweiser an
Kraftfahrzeugen mit wenigstens zwei an unterschiedliche Dach- bzw. Schiebedachöffnungsbreiten anpassbaren Befestigungseinrichtungen, deren Oberteile mit
dem Dachwindabweiser und deren gelenkig daran angeschlossene, in die Schiebedachöffnung hineinragenden
Unterteile mit dem Rahmen der Schiebedachöffnung
verbunden sind und den Dachwindabweiser, unter Verwendung von Dichtprofilen entlang seiner Vorder- und
Seitenkanten, auf dem Kraftfahrzeugdach festhalten,
dadurch gekennzeichnet, daß jedes Oberteil (13) ein
quer zur Längsrichtung des Kraftfahrzeugdaches (1)
angeordnetes Schiebeelement (14, 28, 70, 140) mit
einem darin verschiebbaren Schiebestück (31) ist,
an das das Unterteil (36) anschraubbar ist.

2. Lösbare Halterung nach Anspruch 1, dadurch gekennzeichnet, daß das Schiebeelement (14, 28, 70, 140)
eine Verschiebewanne (15, 29, 55) mit einem Bodenschlitz (16, 30, 57) für das Schiebestück (31) aufweist.

3. Lösbare Halterung nach den Ansprüchen 1 und 2, dadurch gekennzeichnet, daß das Schiebeelement (14, 28,

70, 140) entlang der optimalen Festspannachse (10)
am Dachwindabweiser (1) angeordnet ist.

4. Lösbare Halterung nach den Ansprüchen 1 bis 3, dadurch gekennzeichnet, daß das Schiebeelement (14, 28, 140) an seinen Querseiten (19) Befestigungsöffnungen (20) für durch Löcher (8) im Dachwindabweiser (7) steckbare Befestigungselemente (22, 25, 47, 48) oder Befestigungsansätze (26) am Dachwindabweiser (7) verstärkt sind.

5. Lösbare Halterung nach den Ansprüchen 1 bis 4, dadurch gekennzeichnet, daß die Verschiebewanne (15) in ein streifenförmiges Verschiebeelement (14) aus Kunststoff eingelassen ist, dessen zum Kraftfahrzeugdach (1) hinweisenden Längskanten (17) durch Stege (18) verstärkt sind.

6. Lösbare Halterung nach den Ansprüchen 1 bis 4, dadurch gekennzeichnet, daß die Verschiebewanne (29) in ein streifenförmiges Verschiebeelement (28) aus Blech eingeformt, vorzugsweise eingedrückt ist.

7. Lösbare Halterung nach den Ansprüchen 1 bis 6, dadurch gekennzeichnet, daß das Schiebestück (31) eine Schiebeschraube (32) mit einem in der Verschiebewanne verschiebbarem, hammerartigen Verschiebkopf (33) ist.

8. Lösbare Halterung nach Anspruch 7, dadurch gekennzeichnet, daß der hammerartige Schiebekopf (33) in Verschieberichtung obere (34) und untere (35) Abrundungen aufweist.

9. Lösbare Halterung nach den Ansprüchen 1 bis 8, dadurch gekennzeichnet, daß das Unterteil (36) eine

auf die Schiebeschraube (32, 32a) aufschraubbare Schraubmutter (37) mit einem Kopf (38) ist, der einen Haken (40) für eine Befestigungsschraube (44) bzw. einen Einhänge- oder einen Schraubhaken (50, 52, 53) trägt.

10. Lösbare Halterung nach Anspruch 9, dadurch gekennzeichnet, daß die Schraubmutter (37) mit einem Vier- bzw. Sechskant (42) oder einem Querloch (43) versehen ist.

11. Lösbare Halterung nach den Ansprüchen 9 und 10, dadurch gekennzeichnet, daß der Kopf (38) der Schraubmutter (37) sowie der an ihr sitzende Teil des Hakens (40) einander entsprechende Rundungen (39, 41) aufweisen.

12. Lösbare Halterung nach den Ansprüchen 9 bis 11, dadurch gekennzeichnet, daß die Haken (40) bzw. die Einhänge- und / oder Schraubhaken (50, 52, 53) wenigstens eine Versteifungsdicke (54) aufweisen.

13. Lösbare Halterung nach den Ansprüchen 9 bis 12, dadurch gekennzeichnet, daß der Einhängehaken (50) mit einem Verstärkungsstück (51) zum Durchstecken der Schiebeschraube (32) versehen ist.

14. Lösbare Halterung nach den Ansprüchen 9 bis 13, dadurch gekennzeichnet, daß das Verstärkungsstück (51) einen Winkelansatz aufweist, der an der entsprechend ausgestalteten Form des Einhängehakens (50) anliegt.

15. Lösbare Halterung nach einem oder mehreren der vorangehenden Ansprüche, gekennzeichnet durch eine Vierkantmutter (49), die fest am Einhängehaken (50) bzw. am Verstärkungsstück (51) sitzt.

16. Lösbare Halterung nach den Ansprüchen 1 bis 15, dadurch gekennzeichnet, daß die Befestigungsöffnungen (20) im Schiebeelement (14) mit Gewinde (21) versehen sind, und daß als Befestigungselement Befestigungsschraubbolzen (22) mit schlitzlosem Kopf und Vier- bzw. Sechskantlöchern (24) im unteren Ende verwendet werden.

17. Lösbare Halterung nach den Ansprüchen 1 bis 16, dadurch gekennzeichnet, daß als Befestigungselemente durch die Löcher (8) im Dachwindabweiser (7) und die Befestigungsöffnungen (20) im Schiebeelement (14, 28) steckbare Niete (25) vorgesehen sind.

18. Lösbare Halterung nach den Ansprüchen 1 bis 17, dadurch gekennzeichnet, daß als Befestigungselemente durch die Löcher (8) im Dachwindabweiser (7) und die Befestigungsöffnungen (20) im Schiebeelement (14, 28) steckbare Kopfmuttern (47) vorgesehen sind, in die - von unten - Schrauben (48) einschraubbar sind.

19. Lösbare Halterung nach den Ansprüchen 1 bis 18, dadurch gekennzeichnet, daß zum Befestigen der Schiebeelemente (14, 28) einstückig aus dem Dachwindabweiser (7) herausragende und durch die Befestigungsöffnungen (20) hindurchreichende Befestigungsansätze (26) vorgesehen sind, deren herausragende Bereiche durch Wellensicherungen (27) oder durch Bildung von Nietköpfen gegenüber dem Schiebeelement arretierbar sind.

20. Lösbare Halterung nach den Ansprüchen 1 bis 19, dadurch gekennzeichnet, daß am Schiebeelement (140) Ansätze (141) zum Durchstecken durch die Löcher (8) im Dachwindabweiser (7) vorgesehen sind, deren über den Dachwindabweiser hinausragende Bereiche - vorzugsweise durch Ultraschalleinwirkung - zu Nietköpfen (142) verformt sind.

21. Lösbare Halterung nach den Ansprüchen 1 bis 3, dadurch gekennzeichnet, daß das Schiebeelement (70) als längliche in den Dachwindabweiser (7) abgesenkte Verschiebewanne (55) mit Seitenwänden (56) und einem Bodenschlitz (57) ausgebildet ist.

22. Lösbare Halterung nach den Ansprüchen 1 bis 3, sowie 21, dadurch gekennzeichnet, daß die Verschiebeschraube (32a) einen Schiebekopf (33a) aufweist, der in jeder Verschiebestellung den Bodenschlitz (57) verdeckt.

23. Lösbare Halterung nach den Ansprüchen 1 bis 14, dadurch gekennzeichnet, daß die Befestigungsschrauben (44) für die Haken am Rahmen (6) der Schiebedachöffnung (3) selbstschneidende Schrauben sind.

1/4

0057926

Fig. 1

Fig. 2

Fig. 3

0057926

Fig 4

Fig 5

a.

b.

Fig. 6

Fig. 7

Fig 8

Fig 9

0057926

*Fig. 10*

a.

b.